# EUROPEAN PATENT APPLICATION

(11) **EP 2 017 761 A2**
(43) Date of publication of application: **21.01.2009**
(21) Application number: 08011299.8
(22) Date of filing: 20.06.2008
(51) Int. Cl.: G06F 21/00

(54) **Malware scanner for RFID tags**

(30) Priority: 21.06.2007 US 766621
(71) Applicant: SkyeTek, Inc., Westminster, CO 80020 (US)
(72) Inventor: Chakraborty, Sayan, Niwot Colorado 80503 (US)
(74) Representative: Hughes, Andrea Michelle

(57) **Abstract**

A method for detecting and isolating malware stored in an RFID tag 101. Data stored on the tag is read and scanned to detect malware in the data, if any suspected malware is detected, then the data is stored in a quarantine file 108 in reader memory. The data isolated in the quarantine file may be flagged with a corrupted-tag indicator to indicate the presence of suspected said malware, or a corrupted-tag indicator may be stored in the quarantine file in lieu of the data read from the tag.

## Description

### BACKGROUND

In the field of RFID technology, a new category of threats has arisen wherein 'hackers' or criminals cause valid RFID tags to behave in unexpected (and generally malicious) manners. Typically, computer-bound or mobile RFID readers query RFID tags for their unique identifier or on-tag data, which often serves as a database key or launches some real-world activity. For example, when an RFID reader at a supermarket checkout counter reads the tag on a product, the software driving it could add the item scanned to the list of the customer's purchases, tallying up the total after all products have been scanned.

Until recently, it has been assumed that the mere act of scanning an RFID tag could not modify back-end software, at least not in a malicious way. However, if certain vulnerabilities exist in the RFID software, an RFID tag can be (intentionally) infected with a virus and this virus can infect a backend database used by the RFID software. From there it can be easily spread to other RFID tags.

### Real-World Example

Some airports are planning to expedite baggage handling by attaching RFID-augmented labels to the suitcases as they are checked in. This makes the labels easier to read at greater distances than the current bar-coded baggage labels. Now consider a malicious traveler who attaches a tiny RFID tag, pre-initialized with a virus, to a random person's suitcase before the person checks it in. When the baggage-handling system's RFID reader scans the suitcase at a Y-junction in the conveyor-belt system to determine where to route it, the tag responds with the RFID virus, which could infect the airport's baggage database. Then, all RFID tags produced as new passengers check in later in the day may also be infected. If any of these infected bags transit a hub, they will be rescanned there, thus infecting a different airport. Within a day, hundreds of airport databases all over the world could be infected. Merely infecting other tags is the most benign case. An RFID virus could also carry a payload that causes other damage to the database, as well.

Simply stated, the general outline of the problem is that when an unsuspecting reader scans an infected tag, there is a danger of the tag exploiting a vulnerability in the system's middleware to cause unwanted actions to occur, which may include infecting the database.

### Classes of RFID Malware

Malware is short for malicious software, whose main purpose is to break into and disrupt computer systems. By extension, RFID malware is malware that is transmitted and executed via an RFID tag.

An RFID exploit is malicious RFID tag data that 'exploits' some part of the RFID system that encounters it. RFID systems are susceptible to hacker attacks, just like conventional computing systems. When an RFID reader scans a tag, it expects to get back information in a certain format. However, a malicious person can write carefully crafted data whose format and content is so unexpected that it can corrupt the RFID reader's software and potentially its database as well.

An RFID worm is an RFID-based exploit that abuses a network connection to achieve self-replication. RFID worms may propagate by exploiting online RFID services, but can also spread via RFID tags. The RFID worm code causes unsuspecting RFID servers to download and execute some file from a remote location. This file then proceeds to compromise the RFID middleware server in the same fashion as most Internet-based malware. The worm infected RFID software can then 'infect' new RFID tags by overwriting their data with a copy of the RFID worm code.

An RFID virus is an RFID-based exploit that autonomously self-replicates its code to new RFID tags, without requiring a network connection. In this way, RFID technology presents a vulnerability to an enterprise as it allows an RFID virus to circumvent traditional defenses against traditional virus entry points (e.g., firewalls, email scanners). RFID viruses may or may not have a payload, which modifies or disrupts the workings of the back-end RFID system. Once the newly-infected RFID tags are sent on their way, they infect other RFID systems (assuming use of the same software system). These RFID systems then infect other RFID tags, which infect other RFID software systems, etc.

RFID middleware systems generally use a database to store information that is read from tags and written to them. If the middleware does not treat the data read from the tag correctly, it may be possible to cause the database to execute SQL code that is stored on the tag. This is known as 'SQL injection'.

Normally, the tag's data should not be interpreted as code, but programming errors in the middleware may make it possible. If the middleware inserts the data in an SQL query, without escaping it properly, the data can modify the query. Usually, this involves including a quote in the data, which is interpreted by the SQL parser as ending a section of data and starting the next section of code. The data following the quote is then interpreted as code. The code that ties the RFID reader interface to the middleware is likely to be written in a low-level language such as C or C++. A system executing any code written in such a language may be vulnerable to buffer overflows.

It may seem counterintuitive that RFID tags with their limited memory could cause a buffer overflow, but this may still be possible if the middleware expects to read only small amounts of data. Most RFID tags include information on the amount of memory they contain. If an RFID reader uses this information to determine the amount of data to read, it may read more data than expected, causing its buffer to overflow. Simply using fixed-size tags is not sufficient to prevent buffer overflows, as attackers may introduce unauthorized tags.

### Problem to be solved

In view of the above, it is a problem to detect malware stored in an RFID tag and to prevent the malware from being propagated throughout an RFID system.

### SOLUTION TO THE PROBLEM

The invention provides a system and method as defined in the independent claims for providing the capability to detect malware and isolate it from an RFID system. In one embodiment, data stored on an RFID tag is read and scanned to detect malware in the data. The data is scanned for executable code, SQL, a mismatch between expected or declared and actual format and/or data length, and for rule-based data defined by a set of rules, to determine the presence of said possible malware. if any suspected malware is detected, then the data is stored in a quarantine file in reader memory. The data isolated in the quarantine file may be flagged with a corrupted-tag indicator to indicate the presence of suspected said malware, or a corrupted-tag indicator may be stored in the quarantine file in lieu of the data read from the tag.

### DESCRIPTION OF THE DRAWINGS

Figure 1 is a diagram showing an exemplary RFID reader incorporating a virus scanner in accordance with the present system;

Figure 2 is a flowchart showing an exemplary set of steps performed in one embodiment of the present system; and

Figure 3 is flowchart showing an exemplary set of steps performed in detecting malware, in one embodiment of the present system.

### DETAILED DESCRIPTION

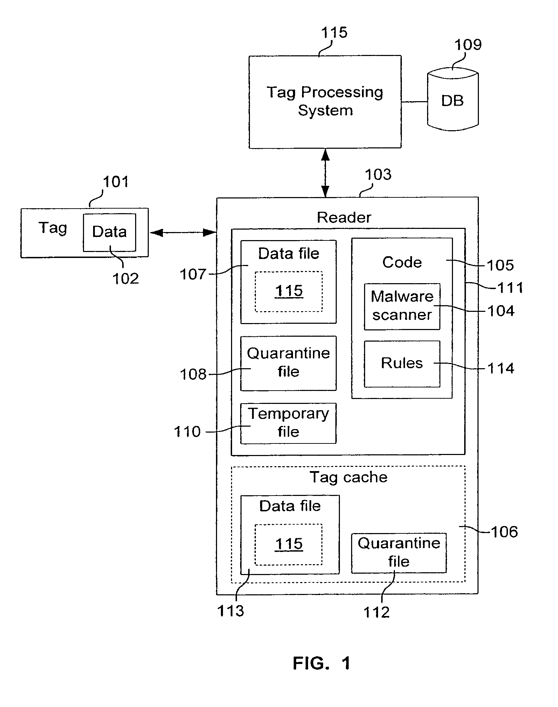

Figure 1 is a diagram showing an exemplary RFID reader 103 incorporating a malware scanner in accordance with the present system. As shown in Figure 1, the system in which the present malware scanner operates includes a reader 103, an RFID tag 101 containing data stored therein, and an optional tag processing system 115, which may be middleware containing the logic for a particular RFID application, or a backend database system (e.g., Oracle, SQL Server, Postgres, MySQL) for storing tag data. If present, tag data that has been scanned and found to be free of malware may be stored in database 109.

In an exemplary embodiment, RFID reader 103 includes reader main memory 111 and optional tag cache memory 106, both of which are collectively referred to herein as "reader memory". In this embodiment, reader main memory 111 includes malware scanner (software) 104, temporary file (or other temporary data storage area) 110, quarantine file 108, and a data file 107 for storing tag data that has been scanned for malware. Optionally, a 'tag corrupted' indicator 115 may be stored in data file 107 to indicate the presence of suspected malware in data 102 read from tag 101. The tag corrupted indicator 115 may either replace the suspected malware-containing data in file 107, or the indicator 115 may be stored in file 107 in addition to the data read from tag 101.

In an alternative embodiment, reader 103 includes tag cache memory 106, which may contain quarantine file 112 and data file 113, which respectively replace quarantine file 108 and data file 107. In this embodiment, tag corrupted indicator 115 may be stored in data file 113 to indicate the presence of suspected malware in data 102 read from tag 101. The tag corrupted indicator 115 may either replace the suspected malware-containing data in file 113, or the indicator 115 may be stored in file 113 in addition to the data read from tag 101.

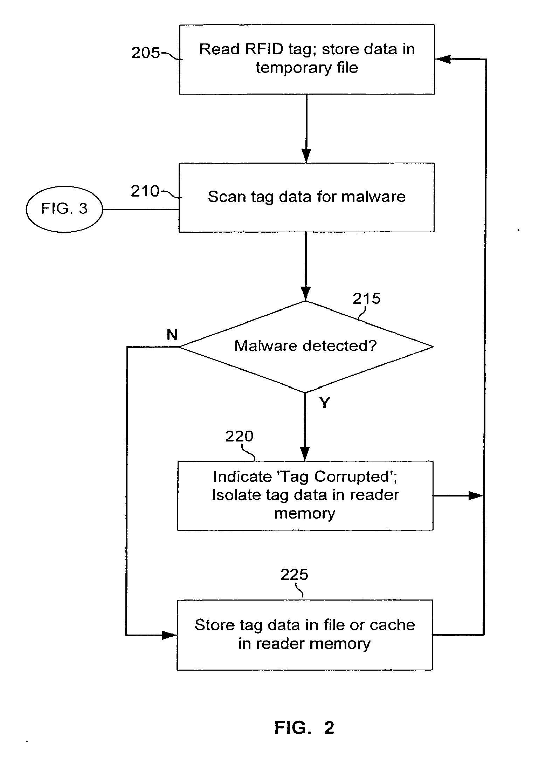

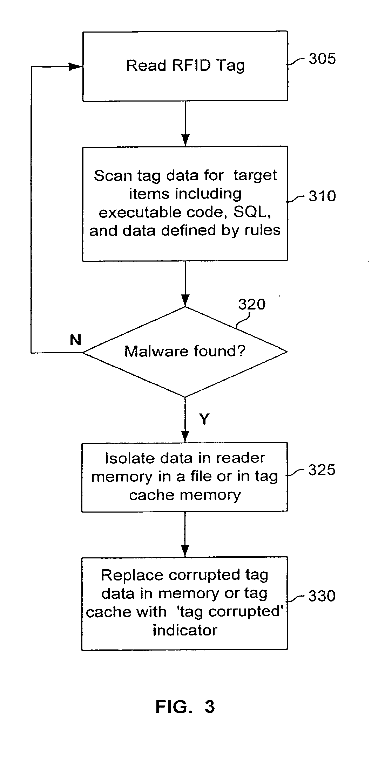

Figure 2 is a flowchart showing an exemplary set of steps performed in one embodiment of the present system. As shown in Figure 2, at step 205, reader 103 reads an RFID tag and, in one embodiment, stores the data in a temporary file 110 in reader memory 111 or 106. At step 210, using malware scanner software 104 stored in the "code" section 105 of reader memory, reader 103 scans the tag data stored in file 110 for malware, as described below in detail with respect to Figure 3. If any suspected malware is detected in the stored data [step 215], then the tag data is isolated in reader memory in a quarantine file 108 or 112 in respective tag memory 111 or tag cache memory 106, at step 220. In this situation, a 'tag corrupted' indicator, with tag identification information, either replaces the corrupted tag data, or is stored, in addition to the data read from tag 101, in memory 111 or in tag cache 106 along with the tag data 102. If the tag data is found to be free of malware, then, at step 225, the data is stored in data file 107, or in data file 113 in tag cache memory 106, if present. Tag processing resumes at step 225 when the next tag is read.

Figure 3 is flowchart showing an exemplary set of steps performed in detecting malware, in one embodiment of the present system. As shown in Figure 3, at step 305, reader 103 reads data 102 stored in an RFID tag 101. At step 310, the data 102 is then scanned for target items including executable code, SQL, a memory or format mismatch, and data defined by rules 114.

To comprise malware, data on an RFID tag (which can always be viewed as just 'bits') must be viewed by some system receiving all or part of the data as interpretable or executable instructions in a format that the system can understand. To that end, a set of rules is defined that identifies syntax constructions which are representative of a variety of interpreted or compiled languages used by the computing community. Such languages include SQL, Java, Javascript, C, C++, Perl, Python, Ruby, Groovy, and the like. Such syntax constructions include keywords (such as SELECT in SQL, or the "if...then" construction in C or Java) or predefined operators (such as * or :=). To avoid false positives, the presence of multiple syntax constructions may be required (as defined by a preset threshold) before an action is taken.

As an example, given an opening brace "(" or "{" or "[", the corresponding closing brace ")", "}", or "]" must also be present to trigger a response other than an error or 'malware present' indication. On detecting these types of constructions, malware scanner software 104 does not transfer that tag data from the tag to other readers or other system components, but instead, quarantines (isolates) the data/detected malware in reader memory. Malware may also present itself as a mismatch between (a) the expected tag data format or length or the declared tag format or length, and (b) the actual tag data format or length. Such mismatches can inadvertently or purposefully cause a buffer overflow in a downstream system (a 'buffer overflow exploit'). A variant of this error occurs when an data value takes an illegal form (such as the variable 'color' having the value 'dog'). This situation is an 'out of bounds' exception. Such errors often results in a downstream system granting a connected system root access to recover from the error, but which is used instead to take over ownership of the system.

At step 320, if no malware is detected, then tag processing continues with the next tag to be read. If malware is detected at step 320, then, at step 325, the data containing detected malware may be quarantined and/or modified, in quarantine file 108 in reader memory 111 or in file 112 in tag cache memory 106, to prevent execution of the malware. At step 330, corrupted tag data in memory or tag cache may optionally be flagged with a 'tag corrupted' indicator 115 or the like.

Certain changes may be made in the above methods and systems without departing from the scope of that which is described herein. It is to be noted that all matter contained in the above description or shown in the accompanying drawings is to be interpreted as illustrative and not in a limiting sense. For example, the methods shown in Figures 2 and 3 may include steps other than those shown therein, and the systems and structures shown in Figure 1 may include different components than those shown in the drawing. The elements and steps shown in the present drawings may be modified in accordance with the methods described herein, and the steps shown therein may be sequenced in other configurations without departing from the scope of the claims.

## Claims

1. A method for detecting and isolating malware stored in an RFID tag (101) comprising:
reading data stored on the tag;
scanning the data read from the tag to detect possible malware in the data; and
if said possible malware is detected, then isolating the data by storing the data in a quarantine file (108, 112) in tag reader memory (106, 111).

2. The method of claim 1, further including flagging the data isolated in the quarantine file with a corrupted-tag indicator to indicate the presence of suspected said malware.

3. The method of claim 1, wherein a corrupted-tag indicator is stored in the quarantine file instead of the data read from the tag.

4. The method of claim 1, wherein the step of scanning the data includes scanning the data for at least one data situation selected from the list of data types and conditions consisting of:
executable code, SQL, out of bounds variables, mismatches between expected and actual data lengths and formats, and rule-based data defined by a set of rules;
to determine the presence of said possible malware.

5. The method of claim 4, wherein the set of rules defines syntax constructions representative of certain computer languages.

6. The method of claim 2 wherein the step of scanning the data includes:
scanning the data for possible malware including executable code, data format, range, and length mismatches, and rule-based data defined by a set of rules; and
if the data thus scanned includes said possible malware, then isolating the data in a quarantine file in tag reader memory;
wherein the set of rules defines syntax constructions representative of certain computer languages.

7. The method of claim 5 or 6, wherein the computer languages include languages selected from the list consisting of SQL, Java, Javascript, C, C++, Perl, Python, Ruby, and Groovy.

8. A method for detecting and isolating malware stored in an RFID tag comprising:
reading data stored on the tag;
storing the data in a temporary file;
scanning the data in the temporary file to detect malware in the data; and
if said malware is detected, then storing the data, in a quarantine file in reader memory, together with an indicator to indicate the presence of suspected said malware;
wherein the step of scanning the data includes scanning the data for possible malware including executable code and rule-based data defined by a set of rules.

9. The method of claim 8, wherein the set of rules defines syntax constructions representative of computer languages including languages selected from the list consisting of SQL, Java, Javascript, C, C++, Perl, Python, Ruby, and Groovy.

10. The method of claim 5, 6, 7 or 9, wherein said syntax constructions include keywords selected from the list consisting of SELECT in SQL, an "if...then" construction, and predefined operators.

11. The method of claim 10, wherein said predefined operators include "*" and ":=".

12. An RFID reader (103), including memory for storing data, for detecting malware stored in an RFID tag (101) comprising:
a scanner (103) for detecting malware;
a set of rules, used by the scanner, for detecting malware;
a quarantine file (108, 112), for isolating suspected malware; and
a temporary file;
wherein:
data stored on the tag is read into the temporary file by the reader and scanned by the scanner for the presence of possible malware;
if said possible malware is detected, then an indicator, indicating the presence of suspected said malware, is stored in the quarantine file in RFID reader memory;
wherein the process of scanning the data includes scanning the data for said possible malware including executable code, data format/range/length mismatches, and rule-based data defined by a set of rules indicating predefined operators and syntax constructions representative of certain computer languages.

13. The RFID reader of claim 12, wherein, if said possible malware is detected, then the data read into the temporary file is transferred to the quarantine file.

14. The RFID reader of claim 12, further including isolating the data in a quarantine file in tag reader memory if the data thus scanned includes said possible malware.

15. The RFID reader of claim 12, wherein the syntax constructions include keywords selected from the list consisting of SELECT in SQL, and an "if...then" construction.

16. The RFID reader of claim 12, wherein the computer languages include languages selected from the list consisting of SQL, Java, Javascript, C, C++, Perl, Python, Ruby, and Groovy.

17. The RFID reader of claim 12, wherein the predefined operators include "*" and ":=".
